# EUROPEAN PATENT APPLICATION

(11) **EP 4 336 206 A1**
(43) Date of publication of application: **13.03.2024**
(21) Application number: 22194817.7
(22) Date of filing: 09.09.2022
(51) Int. Cl.: G01S 3/04, G01S 5/04, G01S 5/12, A63B 29/02, A63C 11/00

(54) **LOCALIZATION DEVICE**

(71) Applicant: Technologies for Freeride s.r.o., 69201 Klentnice (CZ)
(72) Inventor: Zeiner, Zdenek, 69201 Mikulov (CZ); Chalupa, Jan, 70030 Ostrava (CZ)
(74) Representative: Benda, Tomas

(57) **Abstract**

Localization device comprises a first communication component 1 and a second communication component 2, where the second communication component 2 enables receiving and transmitting a signal at 2,4Ghz frequency and uses the Bluetooth AoA technology to transmit the signal, where the localization device is connected with another localization device by at least one of the communication components 1, 2.

## Description

### Background of the invention

The present invention concerns a localization device for searching the objects covered with snow.

### State of the art

Localization of persons buried under an avalanche is performed by means of an avalanche locator. These locators are currently based on the principle of radio receiver and transmitter operating on the globally united frequency of 457kHz. In case of an avalanche fall and burying a user, the remaining members of the group switch the device over to the search mode, which means that the device stops transmitting and starts receiving. The avalanche locator then directs the searching users to the place, from where signal from another device comes, which makes it possible to localize the buried user.

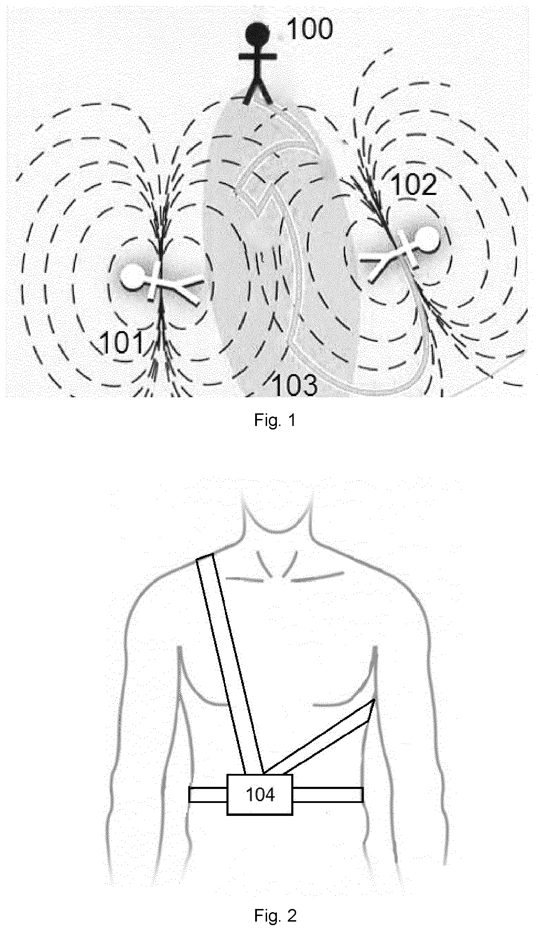

A disadvantage of this kind of system is the fact that the signal spreads by means of field lines curved along an arc and the navigation is performed exactly along these field lines, so the searching person does not proceed to the buried person directly, but along curves copying the field lines, which lengthens the search time. The route of such a search with the use of the state of the art technology is depicted in figure 1, where the searching person is marked with the mark 100, the searched persons with marks 101 and 102, and the route of search with the mark 103. The range is also low. For contemporary avalanche locators it ranges from 40 to 60 meters. If the distance between the searching person and the buried person is greater, it is at first necessary to find the signal, and then proceed along the field lines.

Another disadvantage is that the device searches for another device - not for a human, so it is impossible to determine the position of the person buried under the snow - whether she/he is lying on her/his back, on her/his side or with her/his head down - and "blind" probing is performed.

A disadvantage is also the fact that in case of burying a higher number of persons it is impossible to determine, who is still alive and who not, which is a key piece of information for rescuing the ones, who are still alive.

For the avalanche locators known as state of the art technology it is common that they are positioned on the human body, see fig. 2, where the avalanche locator 104 is drawn with stripes around the waist and over the chest of the dummy. This solution has a disadvantage of the big distance between the avalanche locator and the mouth and nostrils of the wearer. This means that one device is searching for another device. Even when it is managed to find and probe the buried person with total precision, it can happen that it is not manageable to clear the mouth and nostrils at first attempt.

Also, the design of the device itself is a disadvantage. The arrow on the device shows the direction of the field lines, nevertheless there are two directions which the searching person can follow. Both of them lead along the field line in the direction of the buried person, see the above-mentioned fig. 1. In certain positions the device can navigate in the opposite direction along the longer route. Based on the arrow the user is unable to distinguish the right direction. This can only be found out after she/he has started moving in the direction she/he supposes is right. The numbers on the display indicating the signal intensity strength begin to change, and based on that it can be determined, whether the searching person moves along the shorter route, or whether she/he has to turn around by 180° and go back.

Another disadvantage is also the fact that the standard locator updates and signals the direction and intensity of the signal with a certain rate - once per a second, so the search is not fluent.

From the state of the art technology we know a method of localization of objects based on determining the angle of the incoming signal transmitted by the searched object. This method is called "Angle of Arrival" (abbreviated AoA), and is based on the principle that the signal received on antennas (where the receiver has several antennas) has slightly shifted phase due to the difference in time of the flight. From this shift it is possible to calculate the angle, from which the signal comes. To apply the AoA technology it is necessary that the locator has at least two antennas (three are are an advantage) that are geometrically precisely arranged in a way enabling receiving the incoming signal. The technology of the "Time of Flight" (abbreviated ToF) measurement can determine the distance of the transmitting object with very good precision. The principle of functioning depends on the measurement of the movement of the radio signal between two points. This technology is manifold more precise than the localization methods based on RSSI signal strength, that depends on the environment, damping, reflections and mutual orientation of the antennas. The distance can therefore only be estimated, and does not necessarily have to reflect the real situation.

Such searching method can typically be used for industrial applications for location tracking in the inside spaces, such as warehouses, which must nevertheless be equipped with a certain number of static AoA signal receivers, at least with three of them. The individual receivers are equipped with two or more antennas in a certain geometrical arrangement. To ensure the function of the system it is necessary to connect all the receivers to the superior control system, e.g., to a computer, which aggregates data on angles of the incoming signal, and based on them it determines the location of the transmitter in the area. Together with the receivers the superior system builds up an unportable infrastructure, that cannot be used in changing outdoor conditions. The purchase price of such infrastructure is very high, and a high level of technical expertise is necessary for its installation and commissioning. It is because it is assumed that to enable precise localization of individual objects it is necessary that at least one receiver "sees" them, it means that there are no obstacles in the route of the transmitted signal. There can be dozens of them. When applying such a localization system it is thus assumed that only uncovered objects can be localized.

The aim of the invention is to present a localization device that would eliminate the above-mentioned disadvantages of the state of the art technology.

### Feature of the invention

The above mentioned disadvantages are considerably eliminated by an localization device, which comprises a first communication component 1 and a second communication component 2, where the second communication component 2 enables receiving and transmitting a signal at 2,4Ghz frequency and uses the Bluetooth AoA technology to transmit the signal, where the localization device is connected with another localization device by at least one of the communication components 1, 2.

In advantages embodiment the second communication component 2 comprises three antennas 8a, 8b, 8c, which are connected to a switch 9, which is further connected to an evaluation module 10 with a digital output.

In other advantages embodiment the first communication component 1 is a low-frequency radio receiving/transmitting unit working at 457kHz radio frequency, which comprises a ferrite antenna 3a oriented in the X axis, a ferrite antenna 3b oriented in the Y axis and a ferrite antenna 3c oriented in the Z axis, which are connected to an antenna circuit 4, which is further connected to a processor 5 intended for signal processing, which comprises a digital output, and the localization device further comprises a deciding interface 11 connected to the first communication component 1 and to the second communication component 2.

In other advantages embodiment the deciding interface 11 is the evaluation module 10 of the second communication component 2.

In other advantages embodiment the first communication component 1 is a sound signalling device comprises a siren 13, which is connected to an evaluation unit 14, which is connected to a detection elements 15.

In other advantages embodiment the evaluation unit 14 is an evaluation module 10 of the second communication component 2.

In other advantages embodiment the siren 13 is a piezoelectric siren.

In other advantages embodiment a magnetometer and/or an accelerometer and/or a vital signs detector and/or a MEMS type gyroscope and/or a device for measuring mutual distance uses the RSSI method is presented.

The above mentioned disadvantages are also considerably eliminated by safety device, which comprises the localization device according to any of the above mentioned claims.

The above mentioned disadvantages are also considerably eliminated by skiing equipment, which comprises the localization device according to any of the above mentioned claims.

### Description of the drawings

The invention will be further clarified by use of figures, where Fig. 1 presents a diagram of a localization device according to the state of the art, Fig. 2 presents a method, how the localization device according to the state of the art is fixed to a user, Fig. 3 presents a block diagram of the localization device according to the invention, Fig. 4 presents a block diagram of a low-frequency radio receiving/transmitting unit of the localization device according to the invention, Fig. 5 presents a block diagram of a second communication component of the localization device according to the invention, and Fig. 6 presents a block diagram of a sound signalisation device of the localization device according to the invention.

### Preferred embodiments of the invention

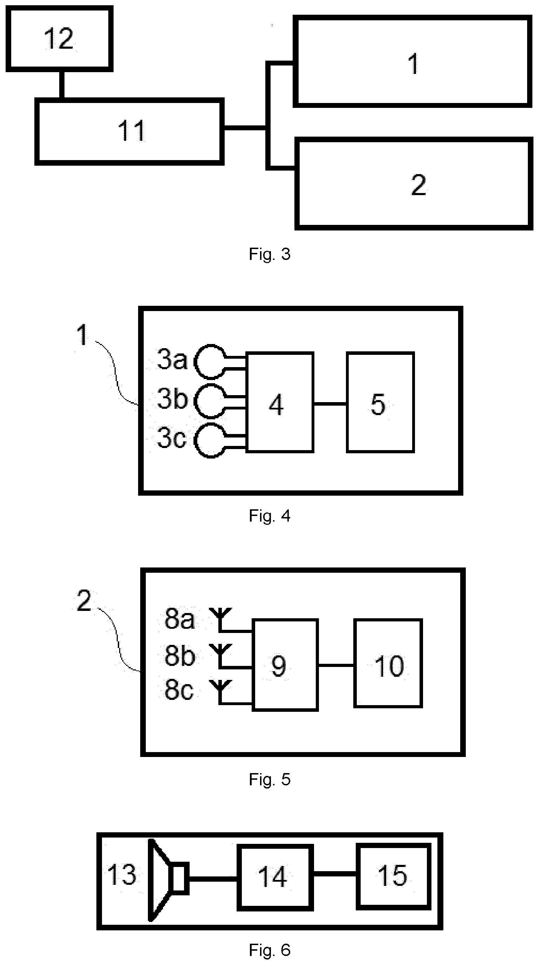

The localization device based on the invention for searching the objects covered with snow in open areas, depicted in Fig. 3, comprises a first communication component 1 and a second communication component 2 that enables receiving and transmitting a signal at 2,4Ghz frequency and that uses the Bluetooth AoA technology to transmit the signal.

The first communication component 1 serves for accurate final tracing of a searched device. It can be a low-frequency radio receiving/transmitting unit working at 457kHz radio frequency, depicted in the block diagram in Fig. 4, comprises a ferrite antenna 3a oriented in the X axis, a ferrite antenna 3b oriented in the Y axis and a ferrite antenna 3c oriented in the Z axis, which are connected to an antenna circuit 4, which is further brought to a processor 5 for signal processing, so called "Digital Signal Processor" (abbreviated DSP), with a not depicted digital output.

The antenna circuit 4 serves for switching and also for pre-processing of the signal received by the ferrite antennas 3a, 3b, 3c, and for forwarding of the signal to the processor 5 for signal processing. In case of work in the transmission mode the antenna circuit 4 is used to supply these ferrite antennas 3a, 3b, 3c.

In the receiving mode the processor 5 is assigned to process a value of voltage and frequency of the signal received on the ferrite antennas 3a, 3b, 3c, by means of which direction and strength of the signal arriving to them, and, subsequently, based on that the position of the source of the signal can be determined.

The example variant of the localization device based on the invention with the above mentioned low-frequency radio receiving/transmitting unit is designated to connect with the localization device known from the state of the art uses the technology working on radio frequency 457kHz used for searching persons buried by an avalanche.

The second communication component 2, so called high-frequency component, is presented in a block diagram in Fig. 5, and is equipped with three antennas 8a, 8b, 8c connected with a switch 9, which is further brought to an evaluation module 10 with a not depicted digital output.

In the receiving mode the switch 9 is designated for fast switching between the individual antennas 8a, 8b, 8c, and for forwarding the received radio signal to the evaluation module 10, which is designated for its processing, for controlling the switch 9, and for calculating the angle of the incoming radio signal, e.g. from a transmitter of a buried person, whereas it provides information about signal intensity. The calculation of the angle is based on the phase shift of the incoming signa, which is comming to the individual antennas 8a, 8b, 8c, which have a defined distance from one another, which is the principle of the AoA technology.

Advantageously, as evident from the Fig. 3, the digital outputs of the first communication component 1 and the second communication component 2 are interconnected by means of a deciding interface 11, which is advantageously data-brought to a display 12. However, the deciding interface 11 can also to be the evaluating module 10 of the second communication component 2.

The deciding interface 11 is designated to determine, which of the used technologies, whether the low-frequency technology or the high-frequency technology, has a higher quality signal and a more useful output. Based on these findings it for example depicts information for the user on the display 12. The display 12 depicts the output from algorithms performed by the deciding interface 11.

If the localization device according to the invention is used only as a transmitter, the display 12 is not necessary.

In the low-frequency technology version the localization device according to the invention can also be localised by means of the localization devices known from state of the art that work at the same low radio frequency 457kHz, or by means of another localization device based on the invention, that also operates at low frequency. There is also the possibility to be localized by mobile phone with a suitable application that searches e.g. by means of measuring signal strength, or by the method of Time of Flight (ToF) measuring, whereas the ToF method is only applicable for high-frequency devices. The Time of Flight measuring technique is less dependent on the surrounding environment, and can exactly determine the distance of the searched transmitter.

The localization device based on the invention can further be equipped with a magnetometer connected to an evaluation module 10, which subsequently transmits the measured values to a remote device, which is in the search mode. Such design is advantageous to determine for example the position/tilt of the body of the searched person, e.g. whether she/he is lying on her/his back or side and which direction is her/his head oriented to, because the head and the mouth and nostrils are commonly located tens of centimetres from the signal transmitter, see Fig. 1. The magnetometers in the transmitter and receiver periodically read the direction and intensity of the magnetic field of the Earth in three axes, thanks to which it is possible to precisely determine the mutual relative position of the transmitter and receiver. This information is valuable for precise probing and starting the excavation in a way enabling to uncover the respiratory system of the buried person at first attempt.

The localization device according to the invention can further advantageously be equipped with a vital signs detector. Such a detector can be an accelerometer reading the chest movement or a microphone placed on the chest reading the noise caused by hearth beating, breathing or subtle movements of the buried person. An option presents also an external pulse sensor in the form of a wrist bracelet or smartwatch, which is wirelessly interconnected with the localization device based on the invention. This enables that the transmitter can send this piece of information to the locator within the range and the rescuers know who they should concentrate on.

The advantage of the localization device according to the invention is the fact that it enables searching along a direct line, as opposed to the curves of the field lines in the case of localization devices known from the state of the art technology, so the process of searching the buried person gets quicker, as it enables signalling, whether the direction of the arrow is right and directs to the buried person, without the necessity to start moving in one direction and then go back.

Another advantage of the presented device is a higher maximum range, which is from 80m to 150m, the rate of position direction updating, which is 10 times per second when using the AoA method, which enables faster and more fluent response of the user, or better angular resolution and minimum angular variation.

The localization device based on the invention is advantageously placed on the chest of the skier using a chest strap or other similar design that holds it as close as possible to the mouth of the user with regard to biomotor skills, ergonomics and other gear that a backcountry skier wears. This placement makes the distance between the mouth and nostrils and the device substantially shorter, which contributes to faster avalanche rescue. Thanks to this, the localization device is firmly connected to the body of the user, and no shifts or rotations occur. The device always remains in the same position, even when the user is knocked down by an avalanche. Thanks to the fixed position of the locator on the body the magnetometer precisely determines the position of the body in the avalanche. The rescuers know the orientation of the body in the avalanche and can easily guess the position of the head in relation to the transmitter, so they are able to clear mouth and nostrils of the buried person at first attempt. At the same time the placement on the chest improves precise functioning of the accelerometer or microphone, that can also be used and that enables detecting breath, heart beat or slight movement, thanks to which the device can identify buried persons who are alive, and so enables the rescuers to rightly set priorities of the rescue operation.

Information on vital signs of the buried person can be directly depicted on display 12 of the localization device based on the invention and/or on a mobile phone with a suitable application together with information on strength of the signal transmitted from the transmitter of the searched person etc.

Reading and transmitting the condition of vital signs of the user runs in the transmission mode only. If the localization device is switched to the search mode, the transmission of the condition of vital signs stops, in order to prevent confusion with signal/data transmitted from the searched persons.

The process of searching the buried persons by means of the localization device based on the invention in the variant with low-frequency radio receiver/transmitter working on 457kHz radio frequency is the following:

When the search mode on the localization device according to the invention is activated, both the low-frequency system as well as the high-frequency systems are active, and both of them independently assess the intensity of the incoming signal and its direction or tilt with respect to the field lines. The deciding interface 11 receives these data and based on the given rules and threshold values determines, which of the systems will depict the direction and intensity of the signal, eventually distance, for example on the display 12. If the level of signal received by one of the systems is too low, it will be replaced by the system with the better level. The high-frequency device usually has a range of 80-150m, and the range of the low-frequency device is usually 40-60m. That is why in the first phase of searching the high-frequency device is prevailingly active, and after getting to a distance of approximately 2m from the buried person the navigation is overtaken by the low-frequency device, as it is more suitable for the final tracing. The following method of the final tracing by means of the low-frequency device is well elaborated and known to most of the users of avalanche locators.

According to the process described above it is obvious that the high-frequency search itself using the AoA method known from the state of the art technology without using an additional system for the final tracing is completely unsuitable. On the basis of extensive measurements it was found out that even though signal shielding is a major problem in halls, however snow does not present the cause of this problem. With regards to the commonly known use of the technology, for example for search in warehouses with high shelves, presence of more receivers capable of searching not only on X and Y axes, but also on Z axis is necessary, as previously mentioned. The three-dimensional search in the exterior, where we only the level of snow is important, is purposeless, and using the AoA method for these purposes is therefore very surprising.

The first communication component 1 can for example also to be a sound signalling device. Such variant is prevailingly suitable for searching lost objects, on which the localization device according to the invention is placed, which are not too deep under the snow, for example persons buried by an avalanche, or ski, which can release after a fall of the skier and get lost under a thin layer of powder snow. Especially, when skiing in the backcountry it is very common that ski get lost after a fall, and it is difficult to find them in deep snow, as they do not leave track under the snow cover.

The sound signalling device is depicted in Fig. 6, and is equipped with a siren 13 interconnected with an evaluation unit 14, which is connected to detection elements 15.

Advantageously, all or only some of the above-mentioned devices according to the invention are placed on a skiing equipment in the place of the binding between its forefoot and heel.

The evaluation module 10 of the second communication component 2 can be used as the evaluation unit 14.

The detection elements 15 can be a part of the above mentioned localization device according to the invention itself.

Advantageously, the siren 13A is a piezoelectric siren, which is an active actuator spreading vibrations to a predetermined material, such as a ski. The piezo element vibrates in the rhythm of the excitation frequency and vibrates the whole device fitted in a plastic case on the ski. Than the sound is spread through this case to its surroundings. The piezo element can be over-excited for a short term, thanks to which higher output can be reached. An advantage of this solution is the fact, that the sound system does not have an opening, which could be blocked by ice or intentionally by hand during theft. The piezo siren is controlled by the driver of the piezo siren, which is an electrical connection of components, which form together a step up voltage converter from 3.6V to 40-50V and a push-pull power circuit, which supplies the electrodes of the piezo element. The amplitude and frequency of the output can be modulated by the controller, i. e. it is possible to set tones, or their intensity.

The detection element 15 can be an accelerometer, or alternatively a MEMS type gyroscope enabling measuring acceleration and tilt of the skis in three axes, as well as gravitation acceleration, and/or a device for measuring mutual distance of the skis, which advantageously uses the RSSI method. The information gained from such measurements enable determining a change of speed of a ski, which can indicate loss of the ski, fall or theft, as well as substantial enlargement of mutual distance of both skis, which can indicate fall and/or loss of the ski.

Activation of the sound signalling device is controlled by evaluation unit 14, which activates the siren 13 by activation signal based on values measured by the detection elements 15. It happens for example when larger than usual mutual distance of both skis or substantial change of speed indicating an extreme movement such as a fall of the skier is detected. The ski then starts propagating sound to attract attention.

Nevertheless, if the communication between any search device and the localization device based on the invention paired with it and placed on the searched object is duplex, the siren 13 can be also activated by entering a command on the search device.

The localization device according to the invention can be equipped with its own small memory for storing records, for example about acceleration or other data measured by it, even information about gravitation acceleration. These values are processed by suitable algorithm and percentage representation of a given state, such as ski in a stand, lying ski, moving ski, ski in extreme movement indicating a fall of the skier etc., is evaluated. Subsequently, the siren can be activated based on the output of the algorithm. It is necessary to fulfil some other preconditions, so, that false activation of the alarm does not occur.

A functionality of the evaluation device 14 can also to be collection of measured data, which subsequently can be used for an analysis leading to improvement of skiing technique. During the tracking mode, when quality of climbing up/going downhill is calculated, the accelerometer can continually run on a higher sampling frequency, and based on the measured signal it is possible to evaluate the given activity. Such information can be the length of a step/slide, or information about purposeless of leg lifting. This is found out as follows: the speed can be determined using the first integration of the acceleration signal and the movement using the next integration of the determined speed. For the purpose of storing information on acceleration, including gravitational acceleration, internal flash memory can be used, for example.

The device for measuring mutual distance of the skis uses e.g., the RSSI (Received Signal Strength Indicator) method. It is mainly the question of correct detection of the state, where both skis are farther than 1.5-2m from one another, which indicates a probable fall and loss of one or both skis. Mutual communication can be realized via Bluetooth or in the form of a proprietary radio on the same frequency.

The term "ski" means any type of ski, as well as a snowboard. Nevertheless, any other object can be searched, such as a backpack.

An internal accumulator charged through wireless Qi open standard can e. g. serve as the power source for the above-mentioned elements of the localization device based on the invention.

The localization device based on the invention has an advantageous pocket form, is water-resistant and equipped with all the necessary electronics ensuring power supply, charging, wireless communication, visual communication with operation option and the search function itself.

The localization device based on the invention can - instead of the display - be equipped with light signalling, e.g., in the form of diodes, serving for signalling charging, locking/unlocking the lock, LED display capable of depicting an arrow indicating the direction of the incoming signal, number information indicating the distance from the ski, sound signalling indicating getting closer/farther etc.

The process of searching the localization device placed e.g., on a ski is the following: up to a distance of units of meters it is searched using the high-frequency AoA method enabling to search the terrain only on the surface, but in the nearest surroundings this device is not any more useful with regard to the height of the snow. Therefore, in our case, it is necessary to perform the final tracing for example using a sound signalling device.

The localization device based on the invention can also serve as a safety device responding to unwanted movement of the object it is placed on, e.g., of skis.

In such a case the localization device based on the invention is paired by evaluation device 14 with the given receiver, advantageously mobile phone with a suitable software, or another stand-alone device suitable for receiving the given signal, e.g., another localization device based on the invention.

In case the skis are stolen, they move, and the detection elements activate the siren and wirelessly send an alarm to the controlling element. It will be possible to find the localization device by means of the locator or an application in a mobile phone that shows e.g., RSSI signal intensity and so enables getting closer to the skis.

The invention is intended for the use on skis as well as snowboards, generally skiing equipment, on which the above-mentioned device is to be mounted.

When using the presented solution based on the invention for searching persons as well as e.g., for searching lost skis, no signal collision can occur. The localization device based on the invention placed e.g., on a ski is paired with its specific locator or mobile phone, whereas the pairing process only proceeds when the module is laid on a wireless charger. Unwanted or unintentional interconnection of the localization device based on the invention placed on skis with the localization device based on the invention designated for searching persons is therefore technically impossible.

## Claims

1. Localization device, **characterized in, that** comprises a first communication component 1 and a second communication component 2, where the second communication component 2 enables receiving and transmitting a signal at 2,4Ghz frequency and uses the Bluetooth AoA technology to transmit the signal, where the localization device is connected with another localization device by at least one of the communication components 1, 2.

2. Localization device according to the claim 1, **characterized in, that** the second communication component 2 comprises three antennas 8a, 8b, 8c, which are connected to a switch 9, which is further connected to an evaluation module 10 with a digital output.

3. Localization device according to any of the claims 1 or 2, **characterized in, that** the first communication component 1 is a low-frequency radio receiving/transmitting unit working at 457kHz radio frequency, which comprises a ferrite antenna 3a oriented in the X axis, a ferrite antenna 3b oriented in the Y axis and a ferrite antenna 3c oriented in the Z axis, which are connected to an antenna circuit 4, which is further connected to a processor 5 intended for signal processing, which comprises a digital output, and the localization device further comprises a deciding interface 11 connected to the first communication component 1 and to the second communication component 2.

4. Localization device according to the claims 3, **characterized in, that** the deciding interface 11 is the evaluation module 10 of the second communication component 2.

5. Localization device according to any of the claims 1 or 2, **characterized in, that** the first communication component 1 is a sound signalling device comprises a siren 13, which is connected to an evaluation unit 14, which is connected to a detection elements 15.

6. Localization device according to the claims 5, **characterized in, that** the evaluation unit 14 is an evaluation module 10 of the second communication component 2.

7. Localization device according to any of the claims 5 or 6, **characterized in, that** the siren 13 is a piezoelectric siren.

8. Localization device according to any of the above mentioned claims, **characterized in, that** a magnetometer and/or an accelerometer and/or a vital signs detector and/or a MEMS type gyroscope and/or a device for measuring mutual distance uses the RSSI method is presented.

9. Safety device, **characterized in, that** comprises the localization device according to any of the above mentioned claims.

10. Skiing equipment, **characterized in, that** comprises the localization device according to any of the above mentioned claims.

## Amended claims

### Amended claims in accordance with Rule 137(2) EPC.

1. Localization device, intended to search signal 457kHz and/or 2,4GHz, comprises a first communication component 1 for receiving/transmitting signal 457 kHz, and a second communication component 2 for receiving/transmitting signal 2,4 GHz and uses the Bluetooth "Angle of Arrival, AoA" technology to transmit the signal, where the localization device is connectable with another localization device by at least one of the communication components 1, 2, **wherein** further comprises a deciding interface 11 connected to the first communication component 1 and to the second communication component 2, intended to determine, which one of the communication components 1 and 2 is for that time more suitable.

2. Localization device according to the claim 1, **wherein** the second communication component 2 comprises three antennas 8a, 8b, 8c, which are connected to a switch 9, which is further connected to an evaluation module 10 with a digital output.

3. Localization device according to any of the claims 1 or 2, **wherein** the first communication component 1 is a low-frequency radio receiving/transmitting unit working at 457kHz radio frequency, which comprises a ferrite antenna 3a oriented in the X axis, a ferrite antenna 3b oriented in the Y axis and a ferrite antenna 3c oriented in the Z axis, which are connected to an antenna circuit 4, which is further connected to a processor 5 intended for signal processing, which comprises a digital output.

4. Localization device according to any of the claims 1 or 3, **wherein** the deciding interface 11 is the evaluation module 10 of the second communication component 2.
